# EUROPÄISCHE PATENTSCHRIFT

(11) **EP 2 798 726 B1**
(45) Veröffentlichungstag und Bekanntmachung des Hinweises auf die Patenterteilung: **29.04.2020**
(21) Anmeldenummer: 12809628.6
(22) Anmeldetag: 21.11.2012
(51) Int. Cl.: H02K 9/06, H02K 7/14, H02K 9/28

(54) **LÜFTERMODUL**
FAN MODULE
MODULE VENTILATEUR

(30) Priorität: 29.12.2011 DE 102011090066
(43) Veröffentlichungstag der Anmeldung: 05.11.2014
(73) Patentinhaber: Robert Bosch GmbH, 70442 Stuttgart (DE)
(72) Erfinder: LE, Thanh-Nhan, 77839 Lichtenau (DE)
(86) Internationale Anmeldenummer: PCT/EP2012/073167
(87) Internationale Veröffentlichungsnummer: WO 2013/097985

(56) Entgegenhaltungen:
- EP-A2- 2 325 497
- JP-U- S61 185 255
- US-A- 4 626 720

## Beschreibung

Die Anmeldung betrifft ein Lüftermodul mit den Merkmalen des unabhängigen Anspruchs. Insbesondere betrifft die Anmeldung ein Lüftermodul mit einer Kühlluftführung für einen Elektromotor des Lüftermoduls nach dem Oberbegriff des Anspruchs 1.

### Stand der Technik

Ein Lüftermodul umfasst ein Lüfterrad und einen koaxialen Elektromotor zum Antrieb des Lüfterrads. Das Lüfterrad umfasst eine axiale Einlassseite und eine radiale Auslassseite. Das Lüftermodul ist dazu eingerichtet, in ein Lüftungssystem eingesetzt zu werden, um Luft von der Einlassseite zur Auslassseite zu befördern. Das Lüftermodul kann insbesondere im Bereich eines Lüftungssystems eines Kraftfahrzeugs eingesetzt werden. Das Lüftungssystem kann insbesondere dazu dienen, einen Innenraum eines Kraftfahrzeugs zu belüften.

Das Lüftermodul kann dazu eingerichtet sein, eine erhebliche elektrische Leistung umzusetzen. Außerdem kann eine Temperatur einer durch das Lüftermodul geförderte Luft einen großen Temperaturbereich aufweisen. Im obigen Beispiel der Innenraumbelüftung des Kraftfahrzeugs kann geförderte Luft Temperaturen zwischen ca. -30 und ca. +50 Grad Celsius aufweisen. Um den Elektromotor des Lüftermoduls zu kühlen, kann eine Kühlluftführung vorgesehen sein, die von der Auslassseite des Lüftermoduls zum Elektromotor führt. Um einen ausreichenden Strom von Kühlluft am Elektromotor vorbei zu gewährleisten, ist die Kühlluft geeignet vom Elektromotor abzuführen. Aus den Dokumenten US 4,626,720 A und EP 2 325 497 A2 ist eine Aussparung im Lüfterrad zur Abführung der Kühlluft bekannt. Dabei soll die Effizienz der Kühlung des Elektromotors hoch sein, während gleichzeitig eine akustische Belastung durch Luft, die durch die Kühlluftführung strömt, gering gehalten sein.

Das Dokument US4626720A beschreibt ein Lüftermodul nach dem Oberbegriff des Anspruchs 1.

Es ist Aufgabe der vorliegenden Erfindung, ein Lüftermodul anzugeben, das diese Voraussetzungen erfüllt. Die Erfindung löst diese Aufgabe mittels eines Lüftermoduls mit den Merkmalen von Anspruch 1. Unteransprüche geben bevorzugte Ausführungsformen wieder.

### Offenbarung der Erfindung

Das erfindungsgemäße Lüftermodul ist im unabhängigen Anspruch 1 definiert.

Vorteilhafterweise wird ein Druckgefälle zwischen der Auslassseite und der Einlassseite des Lüftermoduls genutzt, um die Kühlluft am Elektromotor vorbeizuführen. Die vorbei streichende Luft kann Wärmeenergie aufnehmen und den Elektromotor kühlen. Die erwärmte Kühlluft wird mit Luft, welche an der Einlassseite in das Lüfterrad strömt, vermengt und zusammen mit dieser in Richtung der Auslassseite befördert. Bevorzugterweise ist der Strom der Kühlluft deutlich geringer als ein gesamter Luftstrom durch das Lüfterrad, so dass von der Auslassseite abgezapfte Luft nur unwesentlich durch den Elektromotor erwärmt ist.

Durch die entgegen gesetzten Richtungen von Kühlluft und durch die Einlassseite eintretender Luft kann eine Geräuschbelastung verringert sein, während gleichzeitig der durch die Kühlluftführung strömende Luftstrom durch die angesaugte Luft nicht oder nur unwesentlich abgebremst wird, so dass die Effizienz der Kühlung des Elektromotors gewahrt ist.

Bevorzugterweise ist der Elektromotor ein kommutierter Gleichstrommotor mit Bürsten und die Kühlluftführung verläuft von der Auslassseite zu den Bürsten und von dort in axialer Richtung zum Lüfterrad.

Die Bürsten können zu den thermisch am höchsten belasteten Elementen des Elektromotors zählen. Auf die geschilderte Weise können die Bürsten mit der noch relativ kalten Luft von der Auslassseite gekühlt werden, bevor die Luft am Elektromotor weiter axial entlang streicht und gegebenenfalls weitere Wärmeenergie aufnimmt. Eine zulässige Betriebstemperatur der Bürsten kann dadurch auch bei einer hohen umgesetzten elektrischen Leistung beibehalten sein.

In einer bevorzugten Ausführungsform ist im Bereich der Bürsten ein Leitelement zur Umlenkung der Kühlluft in die axiale Richtung des Lüfterrads vorgesehen. So kann die Kühlluft bereits in axialer Richtung an den Bürsten vorbeiströmen, so dass die Kühlluft innerhalb der Kühlluftführung nicht mehr als nötig umgelenkt bzw. verwirbelt wird.

In einer besonders bevorzugten Ausführungsform verläuft die Kühlluftführung axial durch den Elektromotor hindurch. Insbesondere kann die Kühlluft durch einen Bereich zwischen einem Stator und einem Rotor des Elektromotors hindurchgeführt werden. Dadurch kann eine besonders effiziente Kühlung des Elektromotors in dessen Innenraum gelingen. In einer alternativen Ausführungsform kann die Kühlluft auch außen am Elektromotor axial vorbei geführt sein.

In einer weiter bevorzugten Ausführungsform sind die Bürsten voneinander beabstandet und die Kühlluftführung umfasst ein Leitelement zur Führung eines Teilstroms von Kühlluft an jede der Bürsten. Die einzelnen Bürsten können dadurch gezielt einzeln gekühlt werden, wodurch eine thermische Überlastung jeder einzelnen Bürste vermieden werden kann. Da ein Ausfall des Elektromotors bei einem Schaden an einer der Bürsten wahrscheinlich ist, kann auf diese Weise eine Zuverlässigkeit und gegebenenfalls Lebensdauer des Elektromotors gesteigert sein.

Bevorzugterweise verläuft die Kühlluftführung zwischen der Auslassseite und dem Elektromotor entlang einer Ebene, die die Drehachse des Elektromotors umfasst.

Ein Abstand zwischen der Auslassseite und dem Elektromotor entlang der Kühlluftführung kann so minimiert sein. Außerdem kann die Kühlluft in diesem Bereich abschnittsweise in eine Richtung strömen, die schräg zur Drehachse verläuft, wodurch Geräusche, insbesondere Heul- und Pfeifgeräusche, vermieden bzw. unterdrückt sein können.

Zwischen dem Elektromotor und dem Lüfterrad ist in einer Drehebene eine Bodenplatte mit einer Aussparung zum axialen Durchtritt von Kühlluft von der Auslassseite in die Kühlluftführung vorgesehen.

An der Auslassseite austretende Luft ist vorwiegend in tangentialer und radialer Richtung beschleunigt. Von der Auslassseite in die Kühlluftführung eintretende Luft hingegen bewegt sich vorwiegend in axialer Richtung. Dadurch kann ein relativ konstanter Kühlluftstrom von der Auslassseite abgenommen werden, der ausreichen kann, den Elektromotor auch unter ungünstigen Rahmenbedingungen wie einer hohen Lufttemperatur und einer hohen umgesetzten elektrischen Leistung zu kühlen.

Nach der Erfindung ist an einer Begrenzung der Aussparung eine sich in axialer Richtung erstreckende Schaufel vorgesehen. Durch den Querschnitt der Kühlluftführung, insbesondere im Bereich der Aussparung, und eine entsprechende Dimensionierung der Schaufel können die Strömungsverhältnisse durch die Kühlluftführung so bestimmt werden, dass die Strömungsgeschwindigkeit von Kühlluft am Elektromotor vorbei für die Kühlung ausreicht, ohne zu einer akustischen Belastung zu führen.

In einer weiter bevorzugten Ausführungsform umfasst das Lüfterrad eine Vielzahl axialer Aussparungen zum Durchtritt von Kühlluft zur Einlassseite. Bevorzugterweise sind die axialen Aussparungen bezüglich einer Drehachse so verteilt, dass eine Unwucht des Lüfterrads vermieden wird.

In einer Ausführungsform umfasst das Lüfterrad eine domartige Bodenplatte, die dem Elektromotor axial zugewandt ist. In einem radial achsnahen Bereich erstreckt sich die Bodenplatte folglich am weitesten entgegen der Richtung der axial eintretenden Luft. Da das Lüfterrad die eintretende Luft radial beschleunigt, ist die eintretende Luft im axialen Bereich des Doms relativ langsam, so dass eine Geräuschbelastung durch die einander entgegen gesetzten Luftströme der Kühlluft und der eintretenden Luft gering sein kann.

### Kurze Beschreibung der Figuren

Die Erfindung wird nun mit Bezug auf die beigefügten Figuren genau beschrieben, in denen:
- Figur 1: einen Längsschnitt durch ein Lüftermodul;
- Figur 2: Ströme von Kühl- und Förderluft durch das Lüftermodul aus Figur 1;
- Figur 3: einen Querschnitt durch das Lüftermodul aus Figur 1;
- Figur 4: eine Draufsicht auf einen Teil des Lüftermoduls von Figur 1; und
- Figur 5: eine Draufsicht auf ein weiteres Teil des Lüftermoduls von Figur 1
darstellt.

### Genaue Beschreibung von Ausführungsformen

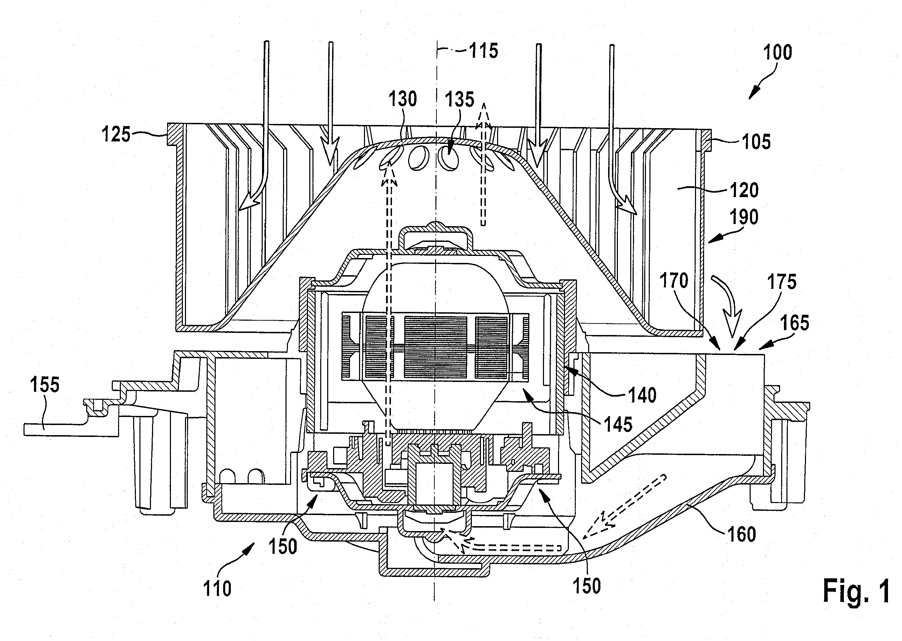

Figur 1 zeigt einen Längsschnitt durch ein Lüftermodul 100. Das Lüftermodul 100 umfasst ein Lüfterrad 105 und einen Elektromotor 110, die axial so miteinander verbunden sind, dass der Elektromotor 110 das Lüfterrad 105 um eine Drehachse 115 drehen kann.

Das Lüfterrad 105 umfasst eine Anzahl von Luftschaufeln, die sich in axialer Richtung erstrecken und auf einem Umfang um die Drehachse 115 angeordnet sind. Oben sind die Luftschaufeln 120 durch einen umlaufenden äußeren Rand 125 zusammengehalten, unten enden sie an einer domartig gewölbten Bodenplatte 130. Nahe der Drehachse 115 ist eine Anzahl Aussparungen 135 in die gewölbte Bodenplatte 130 des Lüfterrads 105 eingebracht.

Der Elektromotor 110 umfasst einen Stator (Ständer) 140 und einen Rotor (Läufer) 145. Der Rotor 145 ist am Stator 140 drehbar um die Drehachse 115 gelagert und drehmomentschlüssig mit dem Lüfterrad 105 verbunden. In unterschiedlichen Ausführungsformen kann der Stator 140 radial außerhalb oder radial innerhalb des Rotors 145 angeordnet sein. In der dargestellten Ausführungsform liegt der Stator 140 außen und der Rotor 145 innen. Am Stator 140 sind zwei Bürsten 150 angebracht, die einander bevorzugterweise bezüglich der Drehachse 115 gegenüberliegen. Die Bürsten 150 ermöglichen einen elektrischen Stromfluss zwischen dem Stator 140 und dem Rotor 145, wobei in Abhängigkeit eines relativen Drehwinkels unterschiedliche Spulen des Rotors 145 mit den Anschlüssen der Bürsten 150 verbunden werden.

In der dargestellten Ausführungsform umfasst das Lüftermodul 100 ferner ein Modulgehäuse 155 und einen Gehäusedeckel 160. Das Modulgehäuse 155 ist am Stator 140 des Elektromotors 110 befestigt und ist dazu eingerichtet, das Lüftermodul 100 an einem Lüftersystem zu befestigen. Das Modulgehäuse 155 umfasst eine Bodenplatte 165, die in einer Drehebene um die Drehachse 115 liegt. In einem Bereich radial außerhalb eines Umrisses des Lüfterrads 105 ist eine Aussparung 170 durch die Bodenplatte 165 vorgesehen, wobei an einer Begrenzung der Aussparung 170 ein Leitelement 175 axial nach oben empor steht. Die Aussparung 170 stellt den Anfang einer Kühlluftführung 180 dar, die zunächst durch das Modulgehäuse 155 und den Gehäusedeckel 160 gebildet ist und von der Aussparung 170 zu einem axial unteren Ende des Elektromotors 110 führt. Von dort verläuft die Kühlluftführung 180 an den Bürsten 150 des Elektromotors 110 vorbei und axial nach oben durch den Elektromotor 110 hindurch bis zum Lüfterrad 105, wo die Kühlluftführung 180 an den Aussparungen 135 endet.

Während des Betriebs des Lüftermoduls 100 tritt Luft axial von oben an einer Einlassseite 185 des Lüfterrads 105 ein und wird radial nach außen zu einer Auslassseite 190 beschleunigt. Ein Teil der beschleunigten Luft tritt von der Auslassseite 190 durch die Aussparung 170 axial in die Kühlluftführung 180 ein und nach dem Durchlaufen durch die Aussparungen 135 des Lüfterrads 105 axial wieder aus. Die austretende Kühlluft vermengt sich dort mit eintretender Luft und kann erneut durch das Lüfterrad 105 gefördert werden.

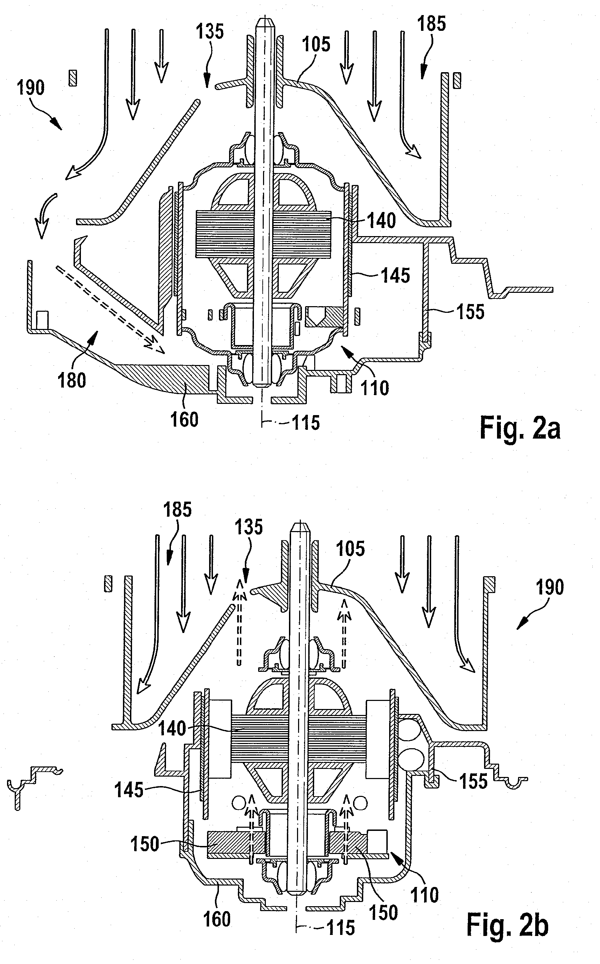

Figur 2 zeigt Ströme von Kühl- und Förderluft durch das Lüftermodul 100 aus Figur 1. Figuren 2a und 2b zeigen Längsschnitte durch das Lüftermodul 100, wobei der in Figur 2b gezeigte um 180° und der in Figur 2a gezeigte Schnitt um 90° um die Drehachse 115 bezüglich der Schnittrichtung der Darstellung aus Fig. 1 verdreht ist.

Aus den beiden Figuren 2a und 2b wird deutlich, wie Förderluft an der Einlassseite 185 des Lüfterrads 105 axial von oben nach unten eintritt und radial nach außen auf die Auslassseite 190 gefördert wird. Ein Teil der geförderten Luft wird von der Auslassseite 190 durch die Kühlluftführung 180 zwischen dem Modulgehäuse 155 und dem Gehäusedeckel 160 schräg nach unten ans untere axiale Ende des Elektromotors 110 gefördert. Dort streicht die Luft an den Bürsten 150 vorbei axial nach oben, durchläuft den Elektromotor 110 zwischen dessen Stator 145 und dessen Rotor 140 und fließt weiter axial nach oben in Richtung des Lüfterrads 105. An der Aussparung 135 in der Bodenplatte 130 des Lüfterrads 105 endet die Kühlluftführung 180. Die Kühlluft tritt in einem Bereich nahe der Drehachse 115 nach oben aus und strömt im Wesentlichen der von oben an der Einlassseite 185 eintretenden Luft entgegen.

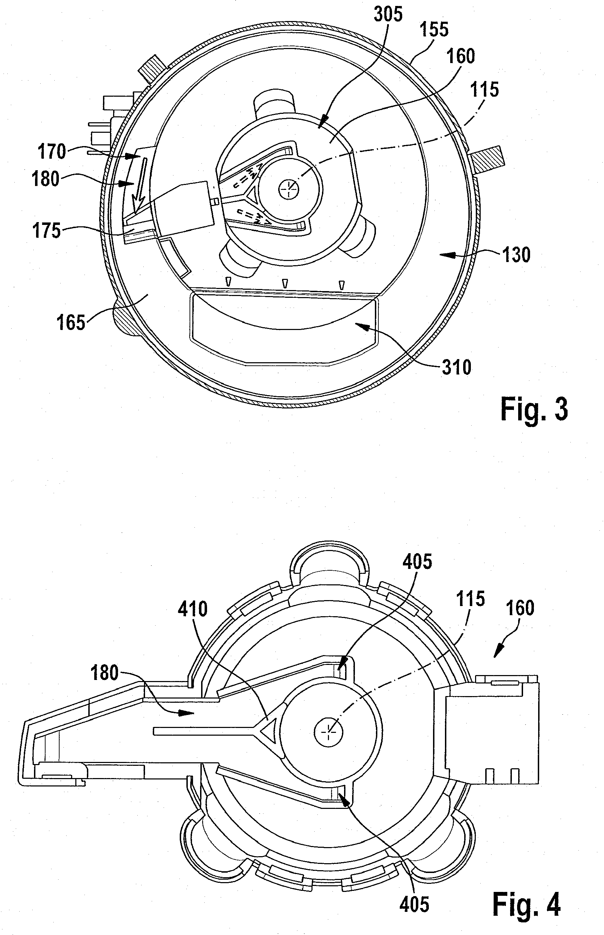

Figur 3 zeigt eine Draufsicht auf das Modulgehäuse 155 des Lüftermoduls 100 aus Figur 1. Bezüglich der Darstellung von Figur 1 verläuft die Blickrichtung von oben nach unten.

Deutlich sichtbar ist die Aussparung 170 durch die Bodenplatte 130 des Modulgehäuses 155. Das Lüfterrad 105 (nicht eingezeichnet) dreht sich in der beispielhaft dargestellten Ausführungsform entgegen dem Uhrzeigersinn, so dass das Leitelement 175 die Aussparung 170 in Bewegungsrichtung der Luft nach hinten abschließt. Das Leitelement 175 ist dazu eingerichtet, einen Teil der vorbei strömenden Luft axial nach unten in die Kühlluftführung 180 abzulenken.

Im Bereich der Drehachse 115 ist ein erster Durchbruch 305 durch die Bodenplatte 165 vorgesehen. Der Durchbruch 305 wird in der dargestellten Ausführungsform später durch ein axiales Ende des Elektromotors 110 ausgefüllt. Außerdem ist optional ein zweiter Durchbruch 310 durch die Bodenplatte 165 vorgesehen, der dazu eingerichtet ist, eine Steuerelektronik zur Ansteuerung des Elektromotors 110 aufzunehmen. Die Steuerelektronik kann auf diese Weise durch die vorbei strömende Luft kühlbar sein.

Figur 4 zeigt den Gehäusedeckel 160 des Lüftermoduls 100 aus Figur 1. Der Gehäusedeckel 160 ist lagerichtig zur Darstellung von Figur 3, jedoch ohne das Modulgehäuse 155 dargestellt. Es wird deutlich, wie der Gehäusedeckel 160 die Kühlluftführung 180 auf dem Abschnitt zwischen der Aussparung 170 und dem unteren axialen Ende des Elektromotors 110 in Figur 1 abschließt.

Die Kühlluftführung 180 verläuft radial von links nach rechts in Richtung der Drehachse 115. Im Weg der Kühlluft ist am Gehäusedeckel 160 ein Leitelement 410 ausgebildet, das den Strom von Kühlluft in zwei Ströme aufteilt, die bevorzugterweise gleich groß sind. Anschließend werden die beiden Ströme in ihren weiteren Verläufen schräg nach oben bzw. unten abgelenkt, indem sie in schrägen Abschnitten der Kühlluftführung 180 geführt werden, durch den Gehäusedeckel 160 begrenzt sind. In Bereichen, die nach Montage des Gehäusedeckels 160 am Lüftermodul 100 axial über den Bürsten 150 liegen, sind axiale Leitelemente 405 am Gehäusedeckel ausgebildet, um die beiden Ströme von Kühlluft axial auf die Bürsten 150 umzulenken. Bevorzugterweise weisen die axialen Leitelemente 405 jeweils eine vorbestimmte Krümmung auf, an der der jeweilige Strom entlang geführt wird, um eine verlustarme Umlenkung um ca. 90° zu bewirken.

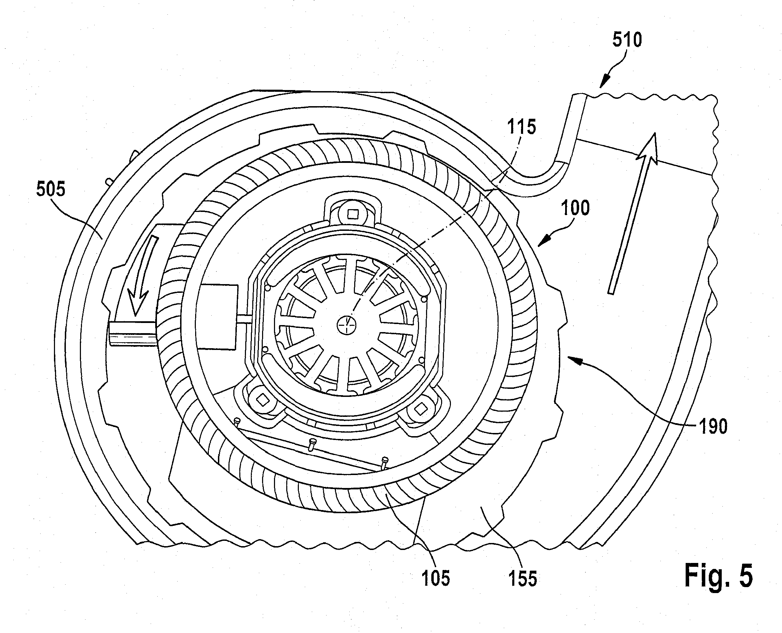

Figur 5 zeigt einen Querschnitt durch das Lüftermodul 100 aus Figur 1. Die Darstellung ist teiltransparent, so dass Elemente unterschiedlicher axialer Positionen entlang der Drehachse 115 sichtbar sind.

Das Lüftermodul 100 ist in einem Luftkanal 505 mit schneckenförmiger Begrenzung angeordnet. Der Luftkanal 505 dient zum Sammeln der radial vom Lüfterrad 105 beschleunigten Luft, um die Luft durch einen tangentialen Abluftkanal 510 zu entlassen.

## Patentansprüche

1. Lüftermodul (100), umfassend:
- ein Lüfterrad (105) mit einer axialen Einlassseite (185) und einer radialen Auslassseite (190),
- einen Elektromotor (110) zum koaxialen Antrieb des Lüfterrads (105), und
- eine Kühlluftführung (180), die von der Auslassseite (190) zum Elektromotor (110) führt,
wobei die Kühlluftführung (180) vom Elektromotor (110) weiter zum Lüfterrad (105) führt und das Lüfterrad (105) in einem achsnahen Bereich eine Aussparung (135) zum Durchtritt von Kühlluft zur Einlassseite (185) aufweist, wobei in einer Drehebene zwischen dem Elektromotor (110) und dem Lüfterrad (105) eine Bodenplatte (165) mit einer Aussparung (170) zum axialen Durchtritt von Kühlluft von der Auslassseite (190) in die Kühlluftführung (180) vorgesehen ist, **dadurch gekennzeichnet, dass** an einer Begrenzung der Aussparung (170) der Bodenplatte (165) eine sich in axialer Richtung erstreckende Schaufel (175) vorgesehen ist.

2. Lüftermodul (100) nach Anspruch 1, wobei der Elektromotor (110) ein kommutierter Gleichstrommotor mit Bürsten (150) ist und die Kühlluftführung (180) von der Auslassseite (190) zu den Bürsten (150) und von dort in axialer Richtung zum Lüfterrad (105) verläuft.

3. Lüftermodul (100) nach Anspruch 2, wobei im Bereich der Bürsten (150) ein Leitelement (405) zur Umlenkung der Kühlluft in die axiale Richtung des Lüfterrads (105) vorgesehen ist.

4. Lüftermodul (100) nach Anspruch 2 oder 3, wobei die Kühlluftführung (180) axial durch den Elektromotor (110) hindurch verläuft.

5. Lüftermodul (100) nach einem der Ansprüche 2 bis 4, wobei die Bürsten (150) voneinander beabstandet sind und die Kühlluftführung (180) ein Leitelement (410) zur Führung eines Teilstroms von Kühlluft an jede der Bürsten (150) umfasst.

6. Lüftermodul (100) nach einem der vorangehenden Ansprüche, wobei die Kühlluftführung (180) zwischen der Auslassseite (190) und dem Elektromotor (110) entlang einer Ebene verläuft, die die Drehachse (115) des Elektromotors (110) umfasst.

7. Lüftermodul (100) nach einem der vorangehenden Ansprüche, wobei das Lüfterrad (105) eine Vielzahl axialer Aussparungen (135) zum Durchtritt von Kühlluft zur Einlassseite (185) aufweist.

8. Lüftermodul (100) nach einem der vorangehenden Ansprüche, wobei das Lüfterrad (105) eine domartige Bodenplatte (130) umfasst, die dem Elektromotor (110) axial zugewandt ist.

## Claims

1. Fan module (100), comprising:
- a fan wheel (105) having an axial inlet side (185) and a radial outlet side (190),
- an electric motor (110) for the purpose of driving the fan wheel (105) in a coaxial manner, and
- a cooling air ducting (180) that leads from the outlet side (190) to the electric motor (110),
wherein the cooling air ducting (180) leads from the electric motor (110) onwards to the fan wheel (105) and the fan wheel (105) comprises a cut-out (135) in a region near to the axis for the purpose of allowing cooling air to pass through to the inlet side (185), wherein a base plate (165) having a cut-out (170) for the purpose of allowing cooling air to pass through axially from the outlet side (190) into the cooling air ducting (180) is provided in a plane of rotation between the electric motor (110) and the fan wheel (105), **characterized in that** a vane (175) that extends in the axial direction is provided on a border of the cut-out (170) of the base plate (165).

2. Fan module (100) according to Claim 1, wherein the electric motor (110) is a commutated direct current motor having brushes (150) and the cooling air ducting (180) extends from the outlet side (190) to the brushes (150) and from there in the axial direction to the fan wheel (105) .

3. Fan module (100) according to Claim 2, wherein a diverting element (405) for the purpose of diverting the cooling air in the axial direction of the fan wheel (105) is provided in the region of the brushes (150).

4. Fan module (100) according to Claim 2 or 3, wherein the cooling air ducting (180) extends axially through the electric motor (110).

5. Fan module (100) according to any one of Claims 2 to 4, wherein the brushes (150) are spaced from one another and the cooling air ducting (180) comprises a diverting element (410) for the purpose of guiding a part flow of cooling air to each of the brushes (150).

6. Fan module (100) according to any one of the preceding claims, wherein the cooling air ducting (180) extends between the outlet side (190) and the electric motor (110) along a plane that includes the axis of rotation (115) of the electric motor (110).

7. Fan module (100) according to any one of the preceding claims, wherein the fan wheel (105) comprises a multiplicity of axial cut-outs (135) for the purpose of allowing cooling air to pass to the inlet side (185).

8. Fan module (100) according to any one of the preceding claims, wherein the fan wheel (105) comprises a dome-like base plate (130) that faces the electric motor (110) in an axial manner.

## Revendications

1. Module de ventilateur (100), comprenant :
- une roue de ventilateur (105) avec un côté d'entrée axial (185) et un côté de sortie radial (190),
- un moteur électrique (110) pour l'entraînement coaxial de la roue de ventilateur (105), et
- un guidage d'air de refroidissement (180) qui conduit depuis le côté de sortie (190) jusqu'au moteur électrique (110),
le guidage d'air de refroidissement (180) conduisant depuis le moteur électrique (110) en outre jusqu'à la roue de ventilateur (105) et la roue de ventilateur (105) présentant, dans une région proche de l'axe, un évidement (135) pour le passage d'air de refroidissement jusqu'au côté d'entrée (185),
dans un plan de rotation entre le moteur électrique (110) et la roue de ventilateur (105) étant prévue une plaque de fond (165) avec un évidement (170) pour le passage axial d'air de refroidissement depuis le côté de sortie (190) dans le guidage d'air de refroidissement (180),
**caractérisé en ce**
**qu'**au niveau d'une limitation de l'évidement (170) de la plaque de fond (165) est prévue une aube (175) s'étendant dans la direction axiale.

2. Module de ventilateur (100) selon la revendication 1, dans lequel le moteur électrique (110) est un moteur à courant continu à commutation avec des balais (150) et le guidage d'air de refroidissement (180) s'étend depuis le côté de sortie (190) jusqu'aux balais (150) et de là dans la direction axiale jusqu'à la roue de ventilateur (105) .

3. Module de ventilateur (100) selon la revendication 2, dans lequel, dans la région des balais (150) est prévu un élément de guidage (405) pour dévier l'air de refroidissement dans la direction axiale de la roue de ventilateur (105).

4. Module de ventilateur (100) selon la revendication 2 ou 3, dans lequel le guidage d'air de refroidissement (180) s'étend axialement à travers le moteur électrique (110).

5. Module de ventilateur (100) selon l'une quelconque des revendications 2 à 4, dans lequel les balais (150) sont espacés les uns des autres et le guidage d'air de refroidissement (180) comprend un élément de guidage (410) pour guider un courant partiel d'air de refroidissement au niveau de chacun des balais (150).

6. Module de ventilateur (100) selon l'une quelconque des revendications précédentes, dans lequel le guidage d'air de refroidissement (180) s'étend entre le côté de sortie (190) et le moteur électrique (110) le long d'un plan qui comprend l'axe de rotation (115) du moteur électrique (110) .

7. Module de ventilateur (100) selon l'une quelconque des revendications précédentes, dans lequel la roue de ventilateur (105) présente une pluralité d'évidements axiaux (135) pour le passage d'air de refroidissement jusqu'au côté d'entrée (185).

8. Module de ventilateur (100) selon l'une quelconque des revendications précédentes, la roue de ventilateur (105) comprenant une plaque de fond en forme de dôme (130) qui est tournée axialement vers le moteur électrique (110).
